# EUROPÄISCHE PATENTSCHRIFT

(11) **EP 0 938 660 B1**
(45) Veröffentlichungstag und Bekanntmachung des Hinweises auf die Patenterteilung: **12.04.2000**
(21) Anmeldenummer: 97950171.5
(22) Anmeldetag: 11.11.1997
(51) Int. Cl.: G01N 21/05

(54) **MIKROMECHANISCHE TRANSMISSIONSMESSZELLE**
MICROMECHANICAL TRANSMISSION MEASURING CELL
CELLULE MICROMECANIQUE DE MESURE DE TRANSMISSION

(30) Priorität: 18.11.1996 DE 19647644; 27.12.1996 DE 29622495 U
(43) Veröffentlichungstag der Anmeldung: 01.09.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: WOIAS, Peter, D-81735 München (DE); HILLERICH, Bernd, D-89075 Ulm (DE)
(74) Vertreter: Schoppe, Fritz, Dipl.-Ing.
(86) Internationale Anmeldenummer: EP9706278
(87) Internationale Veröffentlichungsnummer: WO9822803

(56) Entgegenhaltungen:
- EP-A- 0 488 947
- WO-A-93/22053
- US-A- 4 908 112
- SOBEK D ET AL: "A MICROFABRICATED FLOW CHAMBER FOR OPTICAL MEASUREMENTS IN FLUIDS" PROCEEDINGS OF THE WORKSHOP ON MICRO ELECTRO MECHANICAL SYSTEMS (ME, FORT LAUDERDALE, FEB. 7 - 10, 1993, Nr. WORKSHOP 6, 7.Februar 1993, INSTITUTE OF ELECTRICAL AND ELECTRONICS ENGINEERS, Seiten 219-224, XP000366883

## Beschreibung

Die vorliegende Erfindung bezieht sich auf optische Transmissionsmeßzellen und Reaktoren mit integriertem optischem Detektionsmechanismus und insbesondere auf eine mikromechanische Transmissionsmeßzelle zur Bestimmung einer optischen Absorption eines Probenfluids.

Reaktoren sowohl mit als auch ohne integrierte Auswertekomponente werden gegenwärtig in verschiedenen Bereichen der chemischen Analytik und Synthese eingesetzt. Eine in der chemischen Analytik häufig verwendete Ausführungsform ist die Mikrotiterplatte, die bei immunologischen Testverfahren, wie z.B. dem Enzyme-Linked ImmunoSorbent Assay (ELISA), verwendet wird. Mikrotiterplatten bestehen üblicherweise aus einem optisch transparenten Kunststoffkörper, der eine Anzahl von Vertiefungen als Reaktionsgefäße aufweist. Die Innenwand der Reaktionsgefäße ist mit einer geeigneten biochemischen Rezeptorschicht belegt, die nach Einfüllen der Probenlösung eine selektive Bindung des zu bestimmenden Analytmoleküls an mindestens eine Reaktorwand erlaubt. In weiteren Reaktionsschritten wird im Reaktionsgefäß ein Farbumschlag als Indikatorreaktion erzeugt, der eine Meßgröße für die Menge an gebundenen Analytmolekülen darstellt. Die quantitative Bestimmung der Farbveränderung erfolgt üblicherweise durch eine optische Transmissionsmessung durch das Reaktorinnenvolumen und den Kunststoffkörper hindurch.

Weitere Ausführungsformen von Mikroreaktoren bestehen aus einem durchströmten Volumen, wie z.B. einer Kapillare oder einem mit einem Trägermaterial gefüllten Strömungskanal, an dessen innerer Fläche (der inneren Wandung bzw. Oberfläche des Trägermaterials) eine Rezeptorschicht immobilisiert ist. Ein derartiges System ist in E. Yacoub-George, H. Wolf, S. Koch, P. Woias, A Miniaturized ISFET-ELISA System with a Pretreated Fused Silica Capillary as Reaction Cartridge, Proc. of the Transducers '95 - Eurosensors IX, Stockholm, Schweden, 1995, S. 898-901, beschrieben. Der dabei verwendete chemische Reaktionsmechanismus gleicht dem oben beschrieben Vorgehen und erzeugt als letzten Schritt im Flüssigkeitsvolumen, das im Reaktor vorhanden ist, wiederum eine Indikatorreaktion. Das Reaktorinnenvolumen wird anschließend einer nachgeschalteten Auswertekomponente, wie z.B. einem Photometer oder einem elektrochemischen Sensor, zugeführt, um die quantitative Bestimmung der Indikatorreaktion durchzuführen.

Wie auch Reaktoren mit und ohne integrierte Auswertekomponente werden auch optische Transmissionszellen derzeit in verschiedensten Ausführungen in der chemischen Analytik und Synthese eingesetzt. Einfache Ausführungsformen bestehen aus Meßküvetten, die mit der zu analysierenden Flüssigkeit gefüllt und in den Strahlengang einer Anordnung aus Lichtquelle und optischem Detektor gebracht werden. Dagegen beinhalten Durchflußküvetten einen Strömungskanal, der in Strömungsrichtung oder auch quer zur Strömungsrichtung in den Strahlengang der optischen Anordnung, die aus Lichtquelle und optischem Detektor besteht, gebracht wird.

In E. Verpoorte, A. Manz, H. Lüdli, H.M. Widmer, B.H. van der Schoot, N.F. de Rooij, A Novel Optical Detector for Use in Miniaturized Total Chemical Analysis Systems, Transducers '91, Book of Abstracts, S. 796-799, ist eine mikromechanische Durchflußküvette beschrieben, welche aus einem durch anisotrope Ätzverfahren realisierten Kanal besteht, der an seiner Oberfläche mit einem mit Fenstern versehenen Siliziumchip abgedeckt ist. Durch Verwendung von Siliziumwafern mit einer <100>-Kristallorientierung weisen die anisotrop geätzten Kanalseitenwände die Orientierung der ätzresistenten <111>-Kristallebene auf. Wie es für Fachleute bekannt ist, weist diese Ebene einen Winkel von etwa 54° zu einer waagerechten Bezugsebene auf. Bei der bekannten mikromechanischen Durchflußküvette erfolgt die Lichteinkopplung durch annähernd senkrechte Einstrahlung mit einem Lichtwellenleiter durch eine optisches Eintrittsfenster, der auf eine geneigte Stirnseite des geätzten Kanals justiert wird. Senkrecht bezieht sich in diesem Zusammenhang auf eine zur Flußrichtung des Probenfluids senkrechte Richtung. Durch Reflexion an der einen Stirnseite des Kanals wird Licht in das Zelleninnere und durch Mehrfachreflexionen an den Seitenwänden zur zweiten Stirnseite geführt, wo es durch ein optisches Fenster, d.h. durch den Deckchip, aus dem Kanal ausgekoppelt und in eine senkrecht zur Flußrichtung der Probenflüssigkeit angeordnete Glasfaser eingespeist wird. Die Auskopplung des Lichts erfolgt also an der zweiten Stirnseite, wobei die Auskopplungsglasfaser zu einem Detektor führt, der konventionell aufgebaut sein kann.

Ein Nachteil der handelsüblichen Mikrotiterplatten besteht darin, daß dieselben typische Reaktorinnenvolumina im Bereich einiger ml und Diffusionsweglängen im Bereich einiger mm aufweisen. Dies führt dazu, daß der Ablauf der chemischen Prozesse im Inneren des Reaktors, d.h. die Bindung der Analytmoleküle an die Rezeptorschicht, die Erzeugung der Indikatorgröße, usw., hauptsächlich durch die vergleichsweise langen Diffusionswege und die damit verbundenen langen Diffusionszeiten bestimmt wird. Die Dauer einer Analyse kann daher im Bereich einiger Stunden liegen.

Ferner erfolgt die Prozessierung von Mikrotiterplatten-Tests durch automatisierte Analysengeräte, die einen vergleichsweise hohen Mechanisierungsgrad aufweisen müssen (z.B. Pipettierroboter, Platten-Transportmechanismen), wodurch die Kosten und die Fehleranfälligkeit erhöht werden.

Die Verwendung von Reaktoren ohne integrierte Auswertekomponente erfordert im allgemeinen zusätzliche Transportschritte am Ende der Indikatorreaktion, die zu erhöhtem Aufwand und je nach Ausgestaltung zu Signalverlusten, wie z.B. durch Vermischungsprozesse beim Transport in einem Durchflußsystem, führen können.

Optische Transmissionszellen nach dem Küvettenprinzip weisen ein vergleichsweise großes Flüssigkeitsvolumen im Bereich einiger ml auf und sind nicht für einen Durchflußbetrieb geeignet. Die automatische Prozessierung von Probenserien kann dementsprechend nur mit hohem mechanischem Aufwand unter Verwendung eines Robotersystem bzw. von Handlingautomaten, erfolgen.

Optische Durchflußküvetten werden häufig in konventioneller Technik, wie z.B. durch Kunststoff-Spritzguß, hergestellt, wodurch eine Miniaturisierung nur bis zu einem gewissen Grad möglich ist.

Die mikromechanische Durchflußküvette in Siliziumtechnologie, die oben erwähnt ist, weist ferner, wie es oben beschrieben wurde, eine bewußt gewählte senkrechte Lichteinkopplung auf, damit ein Strahlengang mit Mehrfachreflexionen an den Kanalwänden entsteht. Durch eine hohe Anzahl von Mehrfachreflexionen soll die effektive optische Weglänge der Zelle im Vergleich zum Kanaldurchmesser um Faktoren 10 bis 50 wesentlich erhöht werden, wodurch eine verbesserte Erfassungsempfindlichkeit erreicht werden soll. Da die geätzten Kanalwände aus Silizium jedoch lediglich verlustbehaftete Reflexionen zulassen, muß in diese bekannte Transmissionsmeßzelle eine hohe Lichtleistung eingekoppelt werden, um eine meßbare Lichtleistung am Ausgang auszukoppeln.

Die US 4,908,112 offenbart einen Siliziumhalbleiterwafer zum Analysieren mikronischer biologischer Proben. Das analytische Gerät umfaßt einen Trennungskanal in einer länglichen Form, Elektroden, die in dem Kanal gebildet sind, sowie einen Vorrats- und einen Aufnahmebehälter. Der eine oder auch mehrere Trennungskanäle sind in einem Siliziumwafer gebildet, und dieselben weisen abgeschrägte Wände auf, wie sie typischerweise beim Ätzen mit Kalilauge entstehen. Auf dem Kanal ist eine Siliziumdioxidschicht gebildet. Die Elektroden werden verwendet, um eine Bewegung der Probenflüssigkeiten durch den Kanal mittels Elektroosmose zu aktivieren. Um die Probe zu analysieren, wird ein Laserstrahl auf eine abgeschrägte Seitenwand des Kanals gerichtet, von wo er quer über den Kanal quer zu der gegenüberliegenden Wand reflektiert wird, woraufhin derselbe von dort wieder aus dem Kanal reflektiert wird. Durch das einfallende Laserlicht wird in einer geeigneten analytischen Probe eine Fluoreszenz erzeugt, wobei das Fluoreszenzlicht, das aus dem Kanal austritt, mittels eines Photodetektors erfaßt wird. Das Fluoreszenzlicht wird verwendet, um die durch Elektromigration getrennten Probenbestandteile zu ermitteln.

Die EP 0 488 947 A1 offenbart eine miniaturisierte Detektorzelle, welche aus Silizium oder Quarz hergestellt ist. Dieselbe umfaßt einen Kanal, in dem sich ein Probenfluid befindet, sowie ein Einlaß- und ein Auslaßfenster für Licht, um eine Transmissionsmessung durchzuführen. Das Licht wird senkrecht auf eine schräge Wand des Kanals eingestrahlt, um in dem Kanal bzw. dem länglichen Behälter Mehrfachreflexionen durchzuführen, wonach es aus der Auslaßöffnung zu einem entsprechenden Detektor gerichtet wird. Diese Mehrfachreflexionen führen zu einer deutlichen Verlängerung der Wechselwirkungsstrecke.

Die DE 41 37 060 A1 offenbart eine Mikroküvette für die Infrarotspektroskopie. Dieselbe weist einen Kanal und senkrecht dazu angeordnete Einlaß- und Auslaßöffnungen für ein Probenfluid auf. Dabei wird Licht direkt durch Siliziumscheiben, die die Küvette bilden, eingestrahlt.

Die GB 2 071 355 A offenbart eine Flüssigzelle für eine spektroskopische Analyse, die eine Frontplatte als optisches Fenster, eine Rückplatte, die eine reflektierende Oberfläche aufweist und eine Abdichtungseinrichtung zwischen den zwei Platten aufweist. In der Rückplatte befindet sich eine Eintritts- bzw. eine Austrittsöffnung für Flüssigkeiten, die in der Zelle analysiert werden sollen.

Die Entgegenhaltung 6 (CH 674 082 A5) offenbart eine Küvette, die als Kernstück ein Prisma von ausgewählter Form aus einem lichtdurchlässigen Material aufweist, dessen Brechungsindex höher ist als der Brechungsindex der zu untersuchenden Lösung. Über dem Prisma ist ein Hohlraum angeordnet, der mit einer zu bestimmenden Flüssigkeit gefüllt ist, während unter dem Prisma ein leerer Hohlraum sitzt. Bei der Küvette breitet sich das Licht im wesentlichen in dem Prisma aus und wird durch ein neben dem Prisma angeordneten Fluid beeinflußt.

Die Aufgabe der vorliegenden Erfindung besteht darin, eine mikromechanische Transmissionsmeßzelle zu schaffen, welche einen geringen Probenfluid- bzw. Reagenzienverbrauch ermöglicht und eine hohe Erfassungsgenauigkeit erreicht.

Diese Aufgabe wird durch eine mikromechanische Transmissionsmeßzelle gemäß Anspruch 1 gelöst.

Der Erfindung liegt die Erkenntnis zugrunde, daß für eine hohe Erfassungsgenauigkeit Mehrfachreflexionen von in einen Probenfluidbehälter eingekoppeltem Licht an der Behälterinnenwand vermieden werden müssen, um die Reflexionsverluste in dem Probenfluidbehälter auf ein Minimum zu bringen. Daher wird bei der mikromechanischen Transmissionszelle gemäß der vorliegenden Erfindung ein quasiparalleles Lichtstrahlenbündel, das im folgenden als "Lichtstrahl" bezeichnet wird, mit einem Durchmesser, der kleiner als der Innenquerschnitt des Fluidbehälters ist, zur Transmissionsmessung verwendet. Der "Lichtstrahl" wird definiert auf eine erste Reflektoreinrichtung derart eingekoppelt, daß er den Probenfluidbehälter, der mikromechanisch in einem Siliziumsubstrat hergestellt sein kann, weitgehend ohne Mehrfachreflexionen an der Behälterwand durchläuft. Diese Reflektoreinrichtung kann beispielsweise mit Gold beschichtet sein, wodurch ihre Reflexionseigenschaften optimal werden. Es ist nicht notwendig, die restliche Innenwand mit Gold zu beschichten, da lediglich ein kleiner Anteil des in den Behälters eingespeisten Lichts Mehrfachreflexionen an der Behälterwand erfährt.

Das zur Messung verwendete Licht kann in der Regel nicht als "Lichtstrahl" vorliegen, sondern dasselbe kann divergent sein. In solchen Fällen kann optional ein kollimierendes Linsensystem an geeigneter Stelle in dem Lichtstrahlengang eingefügt werden. Diese Verfahren ist aus der Optik allgemein bekannt. Wird das aus einem Lichtwellenleiter austretenden divergente Licht verwendet, so wird zweckmäßigerweise eine Gradientenlinse geeigneter Länge unmittelbar auf die Endfläche des Lichtwellenleiters aufgebracht.

Die mikromechanische Transmissionszelle zur Bestimmung der optischen Absorption eines Probenfluids umfaßt einen Behälter zum Halten des Probenfluids, eine Lichtdurchlaßöffnung zum Einführen des Lichts in den Behälter und die Reflektoreinrichtung, die das Licht derart bezüglich des Behälters richtet, daß ein Großteil des Lichts den Behälter ohne Mehrfachreflexionen an einer Behälterwand durchläuft.

Im Vergleich zu makroskopischen Reaktoren, wie z.B. der eingangs beschriebenen Mikrotiterplatte, bietet die mikromechanische Transmissionszelle gemäß der vorliegenden Erfindung den Vorteil des geringen Reaktorinnenvolumens, der durch die mikromechanische Siliziumverarbeitungstechnik möglich ist. Dadurch ergeben sich kürze Diffusionswege und Diffusionszeiten, ein geringer Reagenzien- und Analyt- bzw. Probenfluid-Verbrauch. Die mikromechanische Transmissionszelle kann eine Probenfluideinlaßöffnung aufweisen, durch die ein Probenfluid in den Behälter eingebracht wird, wonach sie im sogenannten "Stopped-Flow" Betrieb betrieben wird, d.h. das Probenfluid fließt nicht durch die mikromechanische Transmissionsmeßzelle durch sondern steht gewissermaßen in derselben. Durch Vorsehen einer Probenfluidauslaßöffnung kann die mikromechanische Transmissionszelle gemäß der vorliegenden Erfindung jedoch auch im Durchflußbetrieb eingesetzt werden. Sie weist somit eine hohe Flexibilität im Einsatz auf. Bei Vorhandensein einer Ein- und einer Auslaßöffnung ist ebenfalls der "Stopped-Flow"-Betrieb möglich. In diesem Fall wird das Reagens eingepumpt, wonach die Pumpe gestoppt, und der Ablauf der Reaktion abgewartet werden.

Im Vergleich zu Reaktoren ohne integrierte Auswertekomponente (wie z.B. einer Fused Silica Kapillare) ermöglicht sie eine in-situ-Bestimmung von Reaktionsergebnissen ohne den Aufwand zusätzlicher Transporte. Ferner können Reaktionsabläufe im Reaktorinnenvolumen beispielsweise durch Messungen der Reaktionskinetik in-situ-mäßig bestimmt werden.

Wie es bereits erwähnt wurde, bestehen die Hauptvorteile der mikromechanischen Transmissionszelle gegenüber der bekannten mikromechanischen Durchflußküvette mit integrierter Auswertekomponente in der minimalen Anzahl von Reflexionen in dem Probenfluidbehälter durch die Wahl des Strahlenganges parallel oder senkrecht zur Strömungsrichtung sowie parallel zur Behälterwand, wodurch Reflexionsverluste des durch den Behälter transmittierten Lichts minimiert werden. Ferner erlaubt die mikromechanische Transmissionszelle gemäß der vorliegenden Erfindung beliebige Kombinationsmöglichkeiten der Lichtein- und Lichtauskopplung bzw. der fluidischen Zu- und Abfuhr auf der Ober- bzw. Unterseite des Behälters.

Die mikromechanische Transmissionszelle gemäß der vorliegenden Erfindung kann durch Immobilisierung einer biochemischen Komponente an der Behälterinnenwand, welche durch Wechselwirkung mit einem zugehörigen, zu detektierenden Reaktionspartner, wie z.B. einem Enzymsubstrat oder einem Antigen, eine chemische Reaktion im Reaktorinneren auslöst bzw. beeinflußt und so ein optisch detektierbares Reaktionsergebnis erzeugt, das mit der Analytkonzentration korreliert werden kann, auch als biochemischer Reaktor eingesetzt werden, ohne daß die Transmission durch die Reflexionseigenschaften der biochemischen Komponente an der Innenwand der Behälters beeinflußt wird. Ohne Immobilisierung einer biochemischen Komponente an dem Behälter kann die mikromechanische Transmissionszelle als universell einsetzbare Transmissionszelle verwendet werden.

Bevorzugte Ausführungsbeispiele der vorliegenden Erfindung werden nachfolgend bezugnehmend auf die beiliegenden Zeichnungen detaillierter erläutert. Es zeigen:
- Fig. 1: eine Grundstruktur der Transmissionszelle mit geneigten Wänden an den Stirnflächen eines Behälters und mit einer Lichteinkopplung aus einem Lichtwellenleiter;
- Fig. 2: eine Grundstruktur des Reaktors mit geneigten Wänden an den Seitenflächen des Behälters;
- Fig. 3: eine Draufsicht auf die mikromechanische Transmissionszelle von Fig. 1, bei der der Deckel entfernt ist;
- Fig. 4: eine Querschnittsansicht der mikromechanischen Transmissionszelle von Fig. 3, bei der eine Einlaß- und eine Auslaßöffnung direkt unterhalb bzw. oberhalb des Behälters gezeigt sind;
- Fig. 5: eine Draufsicht auf eine bezüglich Fig. 4 modifizierten Transmissionszelle mit seitlichem Einlaß;
- Fig. 6: eine Querschnittansicht entlang der Linie A-A von Fig. 5;
- Fig. 7: eine mikromechanische Transmissionszelle gemäß einem ersten Ausführungsbeispiel der vorliegenden Erfindung;
- Fig. 8: eine mikromechanische Transmissionszelle gemäß einem zweiten Ausführungsbeispiel der vorliegenden Erfindung mit integrierter Ein- und Auskoppeloptik für Lichtwellenleiter;
- Fig. 9: eine mikromechanische Transmissionszelle gemäß einem dritten Ausführungsbeispiel der vorliegenden Erfindung; und
- Fig. 10: eine mikromechanische Transmissionszelle gemäß einem vierten Ausführungsbeispiel der vorliegenden Erfindung.

Die mikromechanische Transmissionszelle der vorliegenden Erfindung kann für eine integrierte optische Transmissionsmessung verwendet und vollständig durch die Verfahren der Silizium-Mikromechanik hergestellt und miniaturisiert werden. Die mikromechanische Transmissionszelle kann für die folgenden Zwecke verwendet werden:

An der Innenwand des Reaktors wird eine biochemische Komponente immobilisiert, wie z.B. ein Enzym oder ein Rezeptor, die durch Wechselwirkung mit einem zugehörigen, zu detektierenden Reaktionspartner, wie z.B. einem Enzymsubstrat oder Antigen, eine chemische Reaktion im Reaktorinneren auslöst bzw. beeinflußt und so ein optisch detektierbares Reaktionsergebnis erzeugt, das mit der Analytkonzentration korreliert werden kann.

Des weiteren kann die mikromechanische Transmissionszelle gemäß der vorliegenden Erfindung ohne Immobilisierung einer biochemischen Komponente als universell einsetzbare Transmissionszelle verwendet werden. Durch das geringe realisierbare Innenvolumen können zeitlich und lokal aufgelöste Messungen wesentlich besser durchgeführt werden als mit makroskopischen Zellen. Beispielsweise kann der Ablauf einer chemischen Reaktion im Inneren der vom Reaktionsmedium durchströmten Zelle unmittelbar anhand eines optisch detektierbaren Reaktionsergebnisses überwacht werden. Auf diese Weise kann die Reaktionskinetik unmittelbar verfolgt und eventuell durch geeignete Wahl der Reaktionsparameter, wie z.B. der Durchflußrate und des Mischungsverhältnisses der Reagenzien vor der Zelle, während der Messung, d.h. on-line, gesteuert werden.

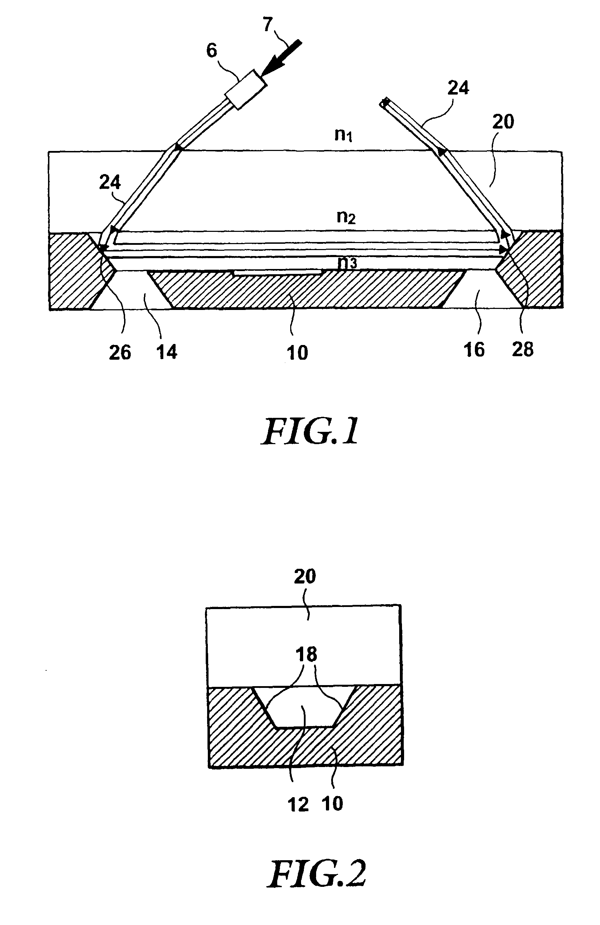

Fig. 1 und Fig. 2 zeigen das fluidische Grundkonzept der mikromechanischen Transmissionszelle gemäß der vorliegenden Erfindung. Fig. 1 stellt einen Längsschnitt durch die Zelle 12 dar, wohingegen Fig. 2 einen Querschnitt derselben liefert. In einem Substrat 10, das vorzugsweise aus Silizium besteht, ist ein Behälter 12 gebildet. In den Behälter 12 kann mittels einer Einlaßöffnung 14 ein Probenfluid eingeführt werden, welches durch eine Auslaßöffnung 16 aus dem Behälter 12 austreten kann. Wie es in Fig. 1 und Fig. 2 gezeigt ist, weisen sowohl die Einlaßöffnung 14 als auch die Auslaßöffnung 16 sowie der Behälter 12 geneigte Wände 18, 26 auf, die mittels bekannter anisotroper Ätzverfahren für Silizium, wie z.B. Ätzen mit Kalilauge, hergestellt werden. An dieser Stelle sei angemerkt, daß die Ein- bzw. die Auslaßöffnung 14, 16 keine geneigten Wände benötigen. Für Fachleute ist es offensichtlich, daß das anisotrope Ätzen mit Kalilauge relativ glatte geneigte Wände 18, 26 ergibt, die auch zur Reflexion von Licht ohne nennenswerte Streuung geeignet sind.

Wenn die mikromechanische Transmissionszelle sowohl die Einlaßöffnung 14 als auch die Auslaßöffnung 16 aufweist, dient der Behälter 12 als Probenfluidkanal. Auf der dem Substrat 10 gegenüberliegenden Seite ist der Behälter 12 durch einen Deckel 20 abgeschlossen. Aus der weiteren Beschreibung wird es offensichtlich, daß die Querschnitt- bzw. Längsschnittform des Behälters 12 unerheblich ist, solange Licht derart in den Behälter 12 gerichtet wird, damit möglichst wenig Mehrfachreflexionen des Lichts an den Wänden auftreten.

In Fig. 1 ist beispielhaft die Transformation eines aus einem Lichtwellenleiter 7 austretenden, divergenten Strahlenbündels in ein quasiparalleles Strahlenbündel 24 ("Lichtstrahl") mit Hilfe einer Gradientenlinse 6 gezeigt.

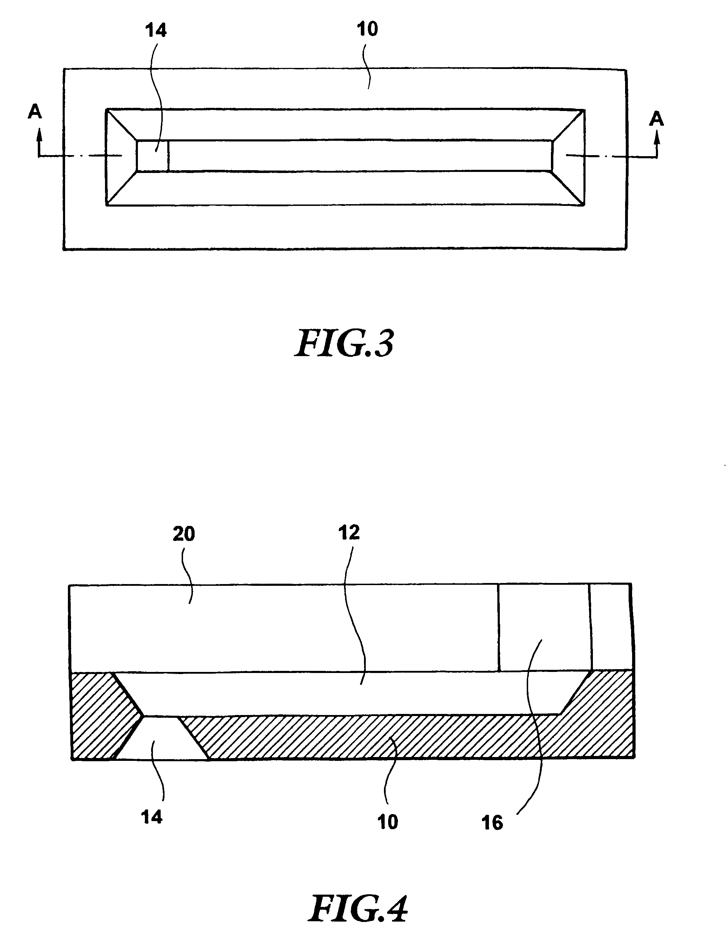

Wie es in Fig. 3 zu sehen ist, weist der Behälter 12 der optischen Transmissionszelle gemäß der vorliegenden Erfindung bevorzugterweise eine längliche Form auf. Insbesondere zeigt Fig. 3 eine Draufsicht auf die mikromechanische Transmissionszelle gemäß der vorliegenden Erfindung, bei der der Deckel 20 weggelassen ist. Bei dieser Variante ist durch das Siliziumsubstrat 10 eine Einlaßöffnung 14 zum Einführen eines Probenfluids in den Behälter 12 gebildet. Wie es aus Fig. 4 ersichtlich ist, ist die Auslaßöffnung 16 jedoch nicht, wie es in Fig. 1 dargestellt ist, ebenfalls in dem Siliziumsubstrat 10 gebildet, sondern in dem Deckel 20.

Der Deckel 20, der den Behälter an der Substratoberseite abschließt, sollte aus einem geeigneten Material bestehen, das abhängig von der Art der nachfolgend beschriebenen Lichteinkopplung zumindest stellenweise eine optische Transparenz aufweisen muß. Ein geeignetes Material für den Deckel 20 könnte beispielsweise Glas sein. Abgesehen von den für die Lichtein- bzw. Lichtauskopplung erforderlichen optisch transparenten Fenstern kann die gesamte Innenwand des Behälters, vorzugsweise jedoch lediglich die als Spiegelflächen bzw. Reflektoreinrichtungen verwendeten geneigten Wände 18 beschichtet werden, um ein optimales optisches Reflexionsverhalten zu erzielen. Ein geeignetes Beschichtungsmaterial für Silizium ist beispielsweise Gold.

Wie es aus dem Vergleich von Fig. 4 mit Fig. 1 offensichtlich ist, können der Zu- und Abfluß des Behälters 12 auf beliebige Art und Weise kombiniert werden. Der Zu- und der Abfluß können entweder an der Rückseite des Substrats 10 oder im Deckel 20 realisiert werden.

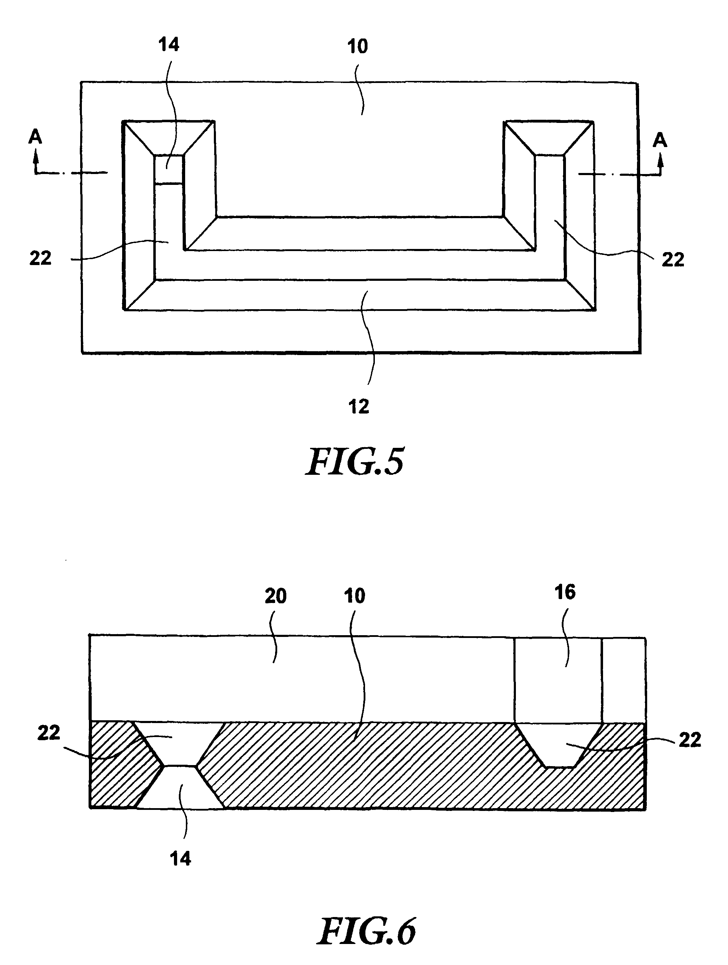

Wie es in Fig. 5 und Fig. 6 gezeigt ist, wobei Fig. 6 ein Querschnitt entlang der Linie A-A von Fig. 5 ist, kann die Einlaßöffnung 14 bzw. die Auslaßöffnung 16 (Fig. 6) auch seitlich von dem Behälter 12 angeordnet werden, wobei dieselben mittels eines kurzen Zuführungskanals 22 jeweils mit dem Behälter 12 verbunden sind.

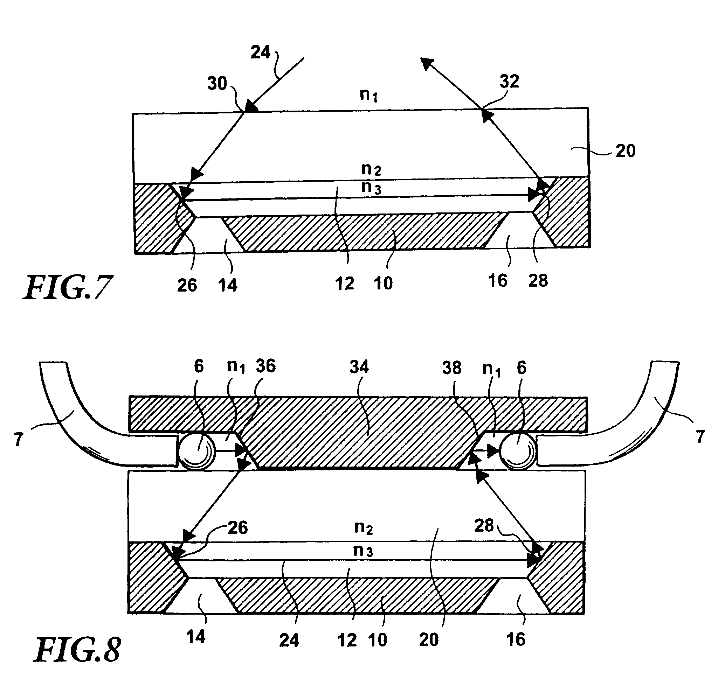

Fig. 7 zeigt eine Funktionsdarstellung der mikromechanischen Transmissionszelle gemäß einem ersten Ausführungsbeispiel der vorliegenden Erfindung. Durch den transparenten Deckel 20 wird der "Lichtstrahl" 24, der schematisch durch einen Strahlenzug dargestellt ist, unter einem definierten Winkel auf eine Reflektoreinrichtung 26 eingestrahlt. Die Reflektoreinrichtung 26 ist bei dem in Fig. 7 gezeigten Ausführungsbeispiel der mikromechanischen Transmissionsmeßzelle als eine geneigte Wand des Behälters 12 realisiert, welche mit einer hochreflektierenden Schicht, beispielsweise mit Gold, beschichtet sein kann, um ein optimales Reflexionsverhalten zu erreichen.

Der "Lichtstrahl" 24 (im nachfolgenden auch als das "Licht" 24 bezeichnet) wird von einem ersten Medium mit einem Brechungsindex n₁, das beispielsweise Luft sein kann, in den optisch transparenten Deckel 20 mit einem Brechungsindex n₂ und von dort in das Probenfluid mit dem Brechungsindex n₃ eingestrahlt, um von der Reflektoreinrichtung 26 im wesentlichen parallel zu der einen Behälterwand, die durch das Substrat 10 realisiert ist, und der anderen Behälterwand, die durch die Unterseite des Deckels 20 realisiert ist, zu einer weiteren Reflektoreinrichtung 28 gerichtet zu werden, welche wiederum durch eine geneigte Wand des Behälters 12 realisiert sein kann, die optional mit Gold beschichtet ist. Von der weiteren Reflektoreinrichtung 28 aus wird das Licht von dem Probenfluid mit dem Brechungsindex n₃ wieder in den optisch transparenten Deckel mit dem Brechungsindex n₂ und von dort in das äußere Medium mit dem Brechungsindex n₁, das Luft sein kann, gerichtet, wie es in Fig. 7 dargestellt ist.

Der optisch transparente Deckel 20 in Fig. 7 wirkt somit als Lichtdurchlaßöffnung 30 zum Einkoppeln des Lichts 24 in den Behälter 12 und gleichzeitig als weitere Lichtdurchlaßöffnung 32, um das Licht 24 aus dem Behälter 12 wieder austreten zu lassen. Für Fachleute ist es offensichtlich, daß der Deckel 20 nicht unbedingt vollständig aus transparentem Material sein muß, sondern daß derselbe beispielsweise ebenfalls aus dem Substratmaterial 10, wie z.B. Silizium, gebildet sein kann, wobei er jedoch dann als die Lichtdurchlaßöffnung 30 ein transparentes Fenster und auch für die weitere Lichtdurchlaßöffnung 32 ebenfalls ein entsprechend gestaltetes transparentes Fenster aufweisen muß. Falls kein "Lichtstrahl", also kein vollständig kollimiertes Licht zur Verfügung steht, so wird dasselbe jedoch durch die Einkopplung des Lichts 24 auf die Reflektoreinrichtung 26 annähernd parallel zu den Begrenzungswänden des Behälters 12 gerichtet sein, derart, daß ein Großteil des Lichts 24 den Behälter 12 ohne Mehrfachreflexionen an einer Wand desselben durchläuft. In diesem Fall kann es sinnvoll sein, die Seitenwände des Behälters vollständig mit einer hochreflektierenden Schicht, z.B. Gold, zu versehen. Ein wesentlicher Punkt der vorliegenden Erfindung besteht demnach darin, daß das Licht 24 im wesentlichen parallel zur Oberfläche des Substrats 10 läuft, die die bezüglich Fig. 7 untere Wand des Behälters 12 bildet.

Die Neigung der Reflektoreinrichtung 26 sowie der weiteren Reflektoreinrichtung 28 bezüglich der Längsrichtung des Behälters 12 kann durch das anisotrope Kaliumlauge-Ätzen bestimmt sein, wodurch sich ein Neigungswinkel von etwa 55° ergibt. Geneigte Wände mit anderen Neigungswinkeln oder extra in dem Probenfluidbehälter geformte Reflektoren können jedoch ebenfalls bei der Transmissionszelle gemäß der vorliegenden Erfindung verwendet werden, solange ein Großteil des in den Probenfluidbehälter eingestrahlten Lichts denselben ohne Mehrfachreflexionen an der Behälterwand durchläuft. Durch den Einkopplungswinkel des Lichtstrahls 24 in den transparenten Deckel 20 kann jeder beliebige Einfallswinkel des Lichts 24 auf die Reflektoreinrichtung 26 erreicht werden, derart, daß der Strahl im wesentlichen parallel zu dem Substrat 10 geführt wird, wodurch nur ein geringer Teil an Mehrfachreflexionen an einer Wand des Behälters 12 auftritt, um optische Verluste in dem Behälter 12 minimal zu halten. Durch den Einkopplungswinkel des Lichts 24 in den optisch transparenten Deckel kann somit jede Brechzahl n₃ des Probenfluids ausgeglichen werden, wodurch die optische Transmissionsmeßzelle gemäß der vorliegenden Erfindung eine große Flexibilität im Einsatz aufweist, um immer eine möglichst optimal parallele Führung des Lichts zu erreichen.

Die Bestimmung der transmittierten Lichtintensität, d.h. des Lichts, das durch die weitere Lichtdurchlaßöffnung 32 aus dem Deckel 20 austritt, erfolgt mit Hilfe eines für Fachleute bekannten Detektionsverfahrens.

Fig. 8 zeigt ein zweites Ausführungsbeispiel der optischen Transmissionsmeßzelle gemäß der vorliegenden Erfindung. Im Vergleich zum in Fig. 7 gezeigten ersten Ausführungsbeispiel weist das zweite Ausführungsbeispiel zusätzlich eine Ein/ Auskopplungseinrichtung 34 für Lichtwellenleiter auf, welche einen Einkopplungsspiegel 36, einen Auskopplungsspiegel 38, und zwei Kugellinsen 6 und die zwei Lichtwellenleiter 7 aufweist. Die Ein/Auskopplungseinrichtung besteht vorzugsweise ebenfalls aus einem Siliziumchip, wobei der Einkopplungsspiegel 36 sowie der Auskopplungsspiegel 38 als geneigte Seitenflächen realisiert sind, sowie die Lichtwellenleiter 7 und die Linsen 6 selbstjustierend in V-förmig geätzte Vertiefungen positioniert sind, wie es in Fig. 8 dargestellt ist.

Optional können der Einkopplungsspiegel 36 sowie der Auskopplungsspiegel 38 z. B. mit Gold beschichtet werden, um das Reflexionsverhalten der Spiegel zu optimieren.

Der optische Brechungsindex n₁ zwischen dem Ein- und dem Auskopplungsort und dem jeweiligen ersten Reflexionspunkt kann zur Erzielung einer exakt achsparallelen Lichteinkopplung dem Brechungsindex des Mediums im Kanal n₃ angepaßt werden. Diese Anpassung kann beispielsweise durch optisch transparente Vergußmassen oder Flüssigkeiten in dem mit n₁ bezeichneten Raum in Fig. 8 erreicht werden. Der Brechungsindex n₂ des Deckels 20 erzeugt unter diesen Umständen nur eine Parallelverschiebung der Lichtstrahlen, die beim Entwurf der optischen Transmissionsmeßzelle gemäß dem zweiten Ausführungsbeispiel der vorliegenden Erfindung berücksichtigt werden kann.

Gegenüber dem ersten in Fig. 7 gezeigten Ausführungsbeispiel weist das in Fig. 8 gezeigte Ausführungsbeispiel ferner den Vorteil auf, daß die Fehleranfälligkeit gegenüber einem falschen Einkopplungswinkel in den optischen transparenten Deckel 20 beim zweiten Ausführungsbeispiel deutlich reduziert ist, da das in Fig. 8 gezeigte zweite Ausführungsbeispiel immer eine parallel zu dem Substrat 10 bzw. zu der Ein/Auskopplungsvorrichtung 34 ausgerichtete Einkopplung möglich macht, wobei der Brechungsindex n₃, wie es erwähnt wurde, gewissermaßen durch das Medium mit dem Brechungsindex n₁ strukturmäßig berücksichtigt wird.

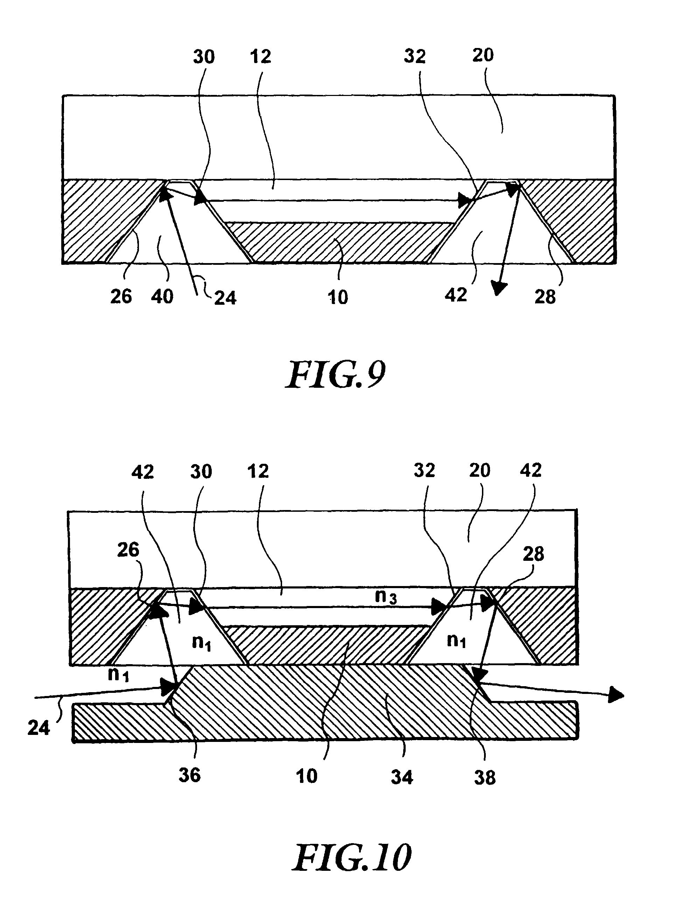

Fig. 9 zeigt ein drittes Ausführungsbeispiel der mikromechanischen Transmissionszelle gemäß der vorliegenden Erfindung. Bei diesem Ausführungsbeispiel erfolgt die Einkopplung bzw. Auskopplung des Lichts 24 an der Rückseite des Substrats 10, wodurch es nicht mehr erforderlich ist, daß der Deckel 20 optisch transparent ist. Um eine Einkopplung des Lichts 24 auf die Reflektoreinrichtung 26 zu ermöglichen, wird ein Lichtschacht 40 in dem Substrat 10 hergestellt. Die Auskopplung des Lichts 24 erfolgt durch einen weiteren Lichtschacht 42, der ebenfalls in dem Substrat 10 hergestellt ist, wie es in Fig. 9 gezeigt ist. Der Lichtschacht 40 und der weitere Lichtschacht 42 sind als geätzte Vertiefungen ausgeführt, die an die Stirnseiten des Behälters 12 bzw. an gegenüberliegenden Stellen der Behälterwände anschließen und zum Behälter hin jeweils eine optisch transparente Membran aufweisen. Die optisch transparente Membran 30 dient somit als Lichtdurchlaßöffnung, während die optisch transparente Membran 32 als weitere Lichtdurchlaßöffnung zum Auskoppeln des Lichts 24 aus dem Behälter 12 wirkt. Die Einkopplung und Auskopplung des Lichts erfolgt durch Reflexion an der Reflexionseinrichtung 26 bzw. an der weiteren Reflektoreinrichtung 28, welche als geneigte Wände in dem Lichtschacht 40 bzw. in dem weiteren Lichtschacht 42 realisiert sind. Der Einstrahlwinkel des Lichts 24, die Einstrahlebene und die Einstrahlorte sind wiederum so gewählt, daß in dem Behälter 12 ein Strahlengang parallel zur Oberfläche des Substrats 10 und entweder parallel (Stirneinstrahlung) oder senkrecht (Seiteneinstrahlung) zur Strömungsrichtung des Probenfluids entsteht, das beispielsweise durch die in Fig. 5 oder Fig. 6 gezeigte seitliche Konfiguration in den Behälter 12 ein-bzw. ausgeführt wird.

Fig. 10 zeigt ein viertes Ausführungsbeispiel der optischen Transmissionsmeßzelle gemäß der vorliegenden Erfindung, welches dem in Fig. 8 gezeigten zweiten Ausführungsbeispiel ähnlich ist, wobei jedoch nun das Licht 24 von der Rückseite des Substrats 10 aus über den Einkopplungsspiegel der Ein-/Auskopplungseinrichtung 34 durch die Lichtdurchlaßöffnung 30 und durch die weitere Lichtdurchlaßöffnung 32 zu der weiteren Reflektoreinrichtung 28 und von dort auf den Auskopplungsspiegel 38 gerichtet wird, um die Transmissionszelle zu verlassen. Zur Erreichung eines optimal parallelen Strahlengangs in dem Behälter 12 kann zum Auffüllen der Lichtschächte 40 und 42, wie es bezüglich Fig. 8 beschrieben wurde, ein Material mit einem bestimmten Brechungsindex n₁ verwendet werden.

In Abweichung von den im Vorhergehenden beschriebenen Ausführungsbeispielen könnte beispielsweise statt der weiteren Reflektoreinrichtung 28 eine Lichtdurchlaßöffnung beispielsweise mittels einer mikromechanischen Bohrung in dem Substrat 10 vorhanden sein, um das Licht 24 ohne eine zweite Reflexion in dem Behälter 12 aus demselben heraus zu führen.

Ferner könnte die weitere Reflektoreinrichtung 28 statt einer geneigten Wand zum Richten des Lichts 24 in den Deckel 20 als senkrecht stehender Spiegel ausgeführt sein, wodurch das Licht 24 nach dem Einkoppeln auf die Reflektoreinrichtung 26 und dem parallelen Verlauf durch den Behälter vollständig auf dem gleichen Weg zurück reflektiert wird und durch eine Reflexion an der Reflektoreinrichtung wieder auf dem gleichen Weg der Einkopplung aus dem Behälter 20 austritt. Fachleute wissen, wie ein hin- und rücklaufender optischer Strahl getrennt werden kann, wie z.B. durch optische Filtereinrichtungen.

## Patentansprüche

1. Mikromechanische Transmissionsmeßzelle zur Bestimmung einer optischen Absorption eines Probenfluids, mit folgenden Merkmalen:
einem in einem Substrat (10) gebildeten Behälter (12) zum Halten des Probenfluids, wobei der Behälter (12) eine längliche Form mit einer Längsachse aufweist;
einer Lichtdurchlaßöffnung (30) zum Einführen von Licht in den Behälter (12); und
einer Reflektoreinrichtung (26), die durch eine durch anisotropes Ätzen des Substrats hergestellte Wand gebildet ist,
dadurch gekennzeichnet, daß
die Reflektoreinrichtung (26) derart bezüglich der Längsrichtung des Behälters (12) geneigt ist, daß Licht, das in einem Winkel zu einer Oberfläche des Substrats (10) auf dieselbe einfällt, entlang der Längsachse zu einer gegenüberliegenden Wand reflektiert wird, wobei ein Großteil des Lichts (24) den Behälters (12) ohne Mehrfachreflexionen an einer Wand des Behälters (12) durchläuft, und die optische Absorption des Probenfluids aufgrund des den Behälter (12) ohne Mehrfachreflexionen durchlaufenden Lichts erfaßbar ist.

2. Mikromechanische Transmissionsmeßzelle nach Anspruch 1,
bei der das Substrat (10) aus silizium besteht.

3. Mikromechanische Transmissionsmeßzelle nach einem der Ansprüche 1 bis 2,
bei der der Behälter (12) durch einen Deckel (20) abgeschlossen ist.

4. Mikromechanische Transmissionsmeßzelle nach einem der Ansprüche 1 bis 3,
bei der eine Strahltransformation von eingespeistem Licht in ein im wesentlichen paralleles Strahlenbündel (24) durch eine Linse (6) bewirkt wird, wohingegen eine weitere Linse (6) den umgekehrten Vorgang bewirkt.

5. Mikromechanische Transmissionsmeßzelle nach einem der vorhergehenden Ansprüche,
die ferner eine Einlaßöffnung (14) in dem Substrat (10) zum Einführen des Probenfluids in den Behälter (12) aufweist.

6. Mikromechanische Transmissionsmeßzelle nach Anspruch 5,
die ferner eine in dem Substrat (10) oder in dem Deckel (20) gebildete Auslaßöffnung (16) für das Probenfluid aufweist, um einen Durchfluß des Probenfluids durch den Behälter (12) zu erlauben.

7. Mikromechanische Transmissionsmeßzelle nach einem der vorhergehenden Ansprüche, welche ferner folgende Merkmale aufweist:
eine weitere Reflektoreinrichtung (28), die von der Reflektoreinrichtung (26) entfernt in dem Weg des Lichts (24) durch den Behälter (12) angeordnet ist und das bezüglich des Behälters (12) gerichtete Licht aus dem Behälter (12) heraus richtet; und
eine weitere Lichtdurchlaßöffnung (32), aus der das durch die weitere Reflektoreinrichtung (28) gerichtete Licht aus dem Behälter (12) austritt.

8. Mikromechanische Transmissionsmeßzelle nach Anspruch 7,
bei die Lichtdurchlaßöffnung (30) und die weitere Lichtdurchlaßöffnung (32) mittels des Deckels (20) gebildet sind, der aus einem für das Licht (24) transparenten Material besteht.

9. Mikromechanische Transmissionsmeßzelle nach Anspruch 8,
bei der auf der Seite des Deckels (20), die dem Behälter (12) gegenüberliegt, eine Ein/Auskopplungseinrichtung (34) angeordnet ist, die einen Einkopplungsspiegel (36) und einen Auskopplungsspiegel (38) aufweist, die derart bezüglich der Lichtdurchlaßöffnungen (30, 32) geneigt sind, daß Licht in der Richtung in die Transmissionsmeßzelle ein- bzw. aus derselben auskoppelbar ist, in der es in dem Behälter (12) für das Probenfluid läuft.

10. Mikromechanische Transmissionsmeßzelle nach einem der Ansprüche 1 bis 6,
bei der die Reflektoreinrichtung (26) außerhalb des Behälters (12) in einem in dem Substrat (10) gebildeten Lichtschacht (40) angeordnet ist.

11. Mikromechanische Transmissionsmeßzelle nach Anspruch 10, die ferner folgende Merkmale aufweist:
eine weitere Lichtdurchlaßöffnung (32), durch die das durch den Behälter (12) laufende Licht (24) aus demselben austritt;
eine in einem weiteren Lichtschacht (42) gebildete weitere Reflektoreinrichtung (28), die das durch die weitere Lichtdurchlaßöffnung (32) laufende Licht (24) von dem Substrat (10) weg richtet.

12. Mikromechanische Transmissionsmeßzelle nach Anspruch 10 oder 11,
bei der der Deckel (20) nicht für das Licht transparent ist.

13. Mikromechanische Transmissionsmeßzelle nach Anspruch 11 oder 12,
bei der in der Nähe der Lichtschächte (40, 42) eine Ein/Auskopplungseinrichtung (34) angeordnet ist, die einen Einkopplungsspiegel (36) und einen Auskopplungsspiegel (38) aufweist, welche derart bezüglich der Reflektoreinrichtung (26) bzw. der weiteren Reflektoreinrichtung (28) geneigt sind, daß das Licht (24) in der Richtung in die mikromechanische Transmissionsmeßzelle ein- bzw. aus derselben auskoppelbar ist, in der es durch den Behälter (12) für das Probenfluid läuft.

14. Mikromechanische Transmissionsmeßzelle nach einem der vorhergehenden Ansprüche,
bei der an einer Innenwand des Behälters (12) eine biochemische Komponente immobilisiert ist, die durch Wechselwirkung mit einem zu erfassenden Reaktionspartner in dem Probenfluid eine chemische Reaktion bewirkt, die ein optisch erfaßbares Reaktionsergebnis liefert.

15. Mikromechanische Transmissionsmeßzelle nach einem der vorhergehenden Ansprüche,
bei der die Reflektoreinrichtung (26) bzw. die weitere Reflektoreinrichtung (28) eine hochreflektierende Beschichtung aufweisen.

16. Mikromechanische Transmissionsmeßzelle nach einem der vorhergehenden Ansprüche,
bei der die Innenwände des Behälters (12) ganz oder teilweise mit einer hochreflektierenden Beschichtung versehen sind.

## Claims

1. A micromechanical transmission measuring cell for determining an optical absorption of a sample fluid, comprising
a receptacle (12) formed in a substrate (10) and used for holding the sample fluid, said receptacle (12) having an elongate shape with a longitudinal axis;
a light passage opening (30) for introducing the light into the receptacle (12); and
a reflector (26) defined by a wall which has been produced by anisotropic etching of the substrate,
characterized in that
the reflector (26) is inclined relative to the longitudinal direction of the receptacle (12) in such a way that the light, which impinges on the surface of the substrate (10) at an angle relative to said surface, is reflected along the longitudinal axis to an opposite wall, most of said light (24) passing through said receptacle (12) without multiple reflections on a wall of said receptacle (12), and that the optical absorption of the sample fluid is detectable on the basis of the light passing through said receptacle (12) without multiple reflections.

2. A micromechanical transmission measuring cell according to claim 1,
wherein the substrate (10) consists of silicon.

3. A micromechanical transmission measuring cell according to one of the claims 1 to 2,
wherein the receptacle (12) is closed by a cover (20).

4. A micromechanical transmission measuring cell according to one of the claims 1 to 3,
wherein a beam transformation of fed-in light into a bundle of substantially parallel rays (24) is effected by a lens (6), whereas a further lens (6) reverses this process.

5. A micromechanical transmission measuring cell according to one of the preceding claims,
comprising in addition an inlet opening (14) in the substrate (10) for introducing the sample fluid into the receptacle (12).

6. A micromechanical transmission measuring cell according to claim 5,
comprising in addition an outlet opening (16) for the sample fluid, said outlet opening (16) being formed in the substrate (10) or in the cover (20) so as to permit the sample fluid to flow through the receptacle (12).

7. A micromechanical transmission measuring cell according to one of the preceding claims, comprising in addition the following features:
a further reflector (28) arranged remote from said reflector (26) in the path of the light through the receptacle (12) and directing the light, which has been directed relative to said receptacle (12), out of said receptacle (12); and
a further light passage opening (32) through which the light that has been directed by means of the further reflector (28) emerges from the receptacle (12).

8. A micromechanical transmission measuring cell according to claim 7,
wherein the light passage opening (30) and the additional light passage opening (32) are formed by means of the cover (20) consisting of a material which is transparent to the light (24).

9. A micromechanical transmission measuring cell according to claim 8,
wherein an in/outcoupling means (34) is arranged on the side of the cover (20) located opposite the receptacle (12), said in/outcoupling means (34) comprising an incoupling mirror (36) and an outcoupling mirror (38) which are inclined relative to the light passage openings (30, 32) in such a way that light can be coupled into and out of the transmission measuring cell in the direction in which it propagates in the receptacle (12) for the sample fluid.

10. A micromechanical transmission measuring cell according to one of the claims 1 to 6,
wherein the reflector (26) is arranged outside of the receptacle (12) in a light shaft (40) formed in the substrate (10).

11. A micromechanical transmission measuring cell according to claim 10, comprising in addition the following features:
a further light passage opening (32) through which the light (24) passing through the receptacle (12) emerges from said receptacle (12);
a further reflector (28) which is formed in an additional light shaft (42) and by means of which the light (24) passing through said further light passage opening (32) is directed away from the substrate (10).

12. A micromechanical transmission measuring cell according to claim 10 or 11,
wherein the cover (20) is not transparent to the light.

13. A micromechanical transmission measuring cell according to claim 11 or 12,
wherein an in/outcoupling means (34), which comprises an incoupling mirror (36) and an outcoupling mirror (38), is arranged in the vicinity of the light shafts (40, 42), said incoupling mirror (36) and said outcoupling mirror (38) being inclined relative to the reflector (26) and the additional reflector (28) in such a way that the light (24) can be coupled into and out of the micromechanical transmission measuring cell in the direction in which it passes through the receptacle (12) for the sample fluid.

14. A micromechanical transmission measuring cell according to one of the preceding claims,
wherein a biochemical component is immobilized on an inner wall of the receptacle (12), which, by interaction with a reaction partner to be detected in the sample fluid, causes a chemical reaction which provides an optically detectable reaction result.

15. A micromechanical transmission measuring cell according to one of the preceding claims,
wherein the reflector (26) and the additional reflector (28), respectively, are provided with a highly reflective coating.

16. A micromechanical transmission measuring cell according to one of the preceding claims,
wherein the inner walls of the receptacle (12) are provided fully or partly with a highly reflective coating.

## Revendications

1. Cellule micromécanique de mesure de transmission destinée à déterminer une absorption optique d'un fluide échantillon, aux caractéristiques suivantes :
un réservoir (12) formé dans un substrat (10), destiné à contenir le fluide échantillon, le réservoir (12) présentant une forme allongée avec un axe longitudinal ;
une ouverture de passage de lumière (30) destinée à introduire de la lumière dans le réservoir (12) ; et
un dispositif réflecteur (26) formé par une paroi réalisée par gravure anisotrope du substrat,
caractérisée par le fait que le dispositif réflecteur (26) est incliné par rapport au sens longitudinal du réservoir (12) de telle sorte que de la lumière incidente, suivant un angle par rapport à une surface du substrat (10), sur cette dernière est réfléchie le long de l'axe longitudinal vers une paroi opposée, une grande partie de la lumière (24) traversant le réservoir (12) sans réflexions multiples sur une paroi du réservoir (12) et l'absorption optique du fluide échantillon pouvant être captée sur base de la lumière traversant le réservoir (12) sans réflexions multiples.

2. Cellule micromécanique de mesure de transmission suivant la revendication 1, dans laquelle le substrat (10) est réalisé en silicium.

3. Cellule micromécanique de mesure de transmission suivant l'une des revendications 1 à 2, dans laquelle le réservoir (12) est fermé par un couvercle (20).

4. Cellule micromécanique de mesure de transmission suivant l'une des revendications 1 à 3, dans laquelle une transformation des rayons de lumière alimentée en un faisceau lumineux sensiblement parallèle (24) est provoquée par une lentille (6), tandis qu'une autre lentille (6) provoque, par contre, l'opération inverse.

5. Cellule micromécanique de mesure de transmission suivant l'une des revendications précédentes, présentant, par ailleurs, une ouverture d'entrée (14) dans le substrat (10), destinée à l'introduction du fluide échantillon dans le réservoir (12).

6. Cellule micromécanique de mesure de transmission suivant la revendication 5, présentant, par ailleurs, une ouverture de sortie (16) du fluide échantillon formée dans le substrat (10) ou dans le couvercle (20), pour permettre un passage du fluide échantillon à travers le réservoir (12).

7. Cellule micromécanique de mesure de transmission suivant l'une des revendications précédentes, présentant, par ailleurs, les caractéristiques suivantes :
un autre dispositif réflecteur (28) disposé, éloigné du dispositif réflecteur (26), sur le trajet de la lumière (24) à travers le réservoir (12) et orientant hors du réservoir (12) la lumière orientée par rapport au réservoir (12) ; et
une autre ouverture de passage de lumière (32) à travers laquelle la lumière orientée par l'autre dispositif réflecteur (28) sort du réservoir (12).

8. Cellule micromécanique de mesure de transmission suivant la revendication 7, dans laquelle l'ouverture de passage de lumière (30) et l'autre ouverture de passage de lumière (32) sont formées à l'aide du couvercle réalisé en un matériau transparent à la lumière (24).

9. Cellule micromécanique de mesure de transmission suivant la revendication 8, dans laquelle est disposé, sur la face du couvercle (20) opposée au réservoir (12), un dispositif de couplage/découplage (34) présentant un miroir de couplage (36) et un miroir de découplage (38), lesquels sont inclinés par rapport aux ouvertures de passage de lumière (30, 32) de telle sorte que de la lumière peut être couplée dans la cellule de mesure de transmission ou découplée de cette dernière dans la direction dans laquelle elle entre dans le réservoir (12) à fluide échantillon.

10. Cellule micromécanique de mesure de transmission suivant l'une des revendications 1 à 6, dans laquelle le dispositif réflecteur (26) est disposé en dehors du réservoir (12), dans un conduit de lumière (40) formé dans le substrat (10).

11. Cellule micromécanique de mesure de transmission suivant la revendication 10, présentant, par ailleurs, les caractéristiques suivantes :
une autre ouverture de passage de lumière (32) à travers laquelle la lumière (24) traversant le réservoir (12) sort de ce dernier ;
un autre dispositif réflecteur (28), formé dans un autre conduit de lumière (42), orientant la lumière (24) traversant l'autre ouverture de passage de lumière (32) dans la direction éloignée du substrat (10).

12. Cellule micromécanique de mesure de transmission suivant la revendication 10 ou 11, dans laquelle le couvercle (20) n'est pas transparent à la lumière.

13. Cellule micromécanique de mesure de transmission suivant la revendication 11 ou 12, dans laquelle est disposé, à proximité des conduits de lumière (40, 42), un dispositif de couplage/découplage (34) présentant un miroir de couplage (36) et un miroir de découplage (38), lesquels sont inclinés par rapport au dispositif réflecteur (26) ou à l'autre dispositif réflecteur (28) de telle sorte que la lumière (24) peut être couplée dans la cellule de mesure de transmission ou découplée de cette dernière dans la direction dans laquelle elle entre dans le réservoir (12) à fluide échantillon.

14. Cellule micromécanique de mesure de transmission suivant l'une des revendications précédentes, dans laquelle est immobilisé, à l'une des parois intérieures du réservoir (12), un composant biochimique qui, par interaction avec un partenaire de réaction à détecter, provoque, dans le fluide échantillon, une réaction chimique donnant un résultat de réaction pouvant être détecté optiquement.

15. Cellule micromécanique de mesure de transmission suivant l'une des revendications précédentes, dans laquelle le dispositif réflecteur (26) ou l'autre dispositif réflecteur (28) présentent un revêtement hautement réflecteur.

16. Cellule micromécanique de mesure de transmission suivant l'une des revendications précédentes, dans laquelle les parois intérieures du réservoir (12) sont pourvues, en tout ou en partie, d'un revêtement hautement réflecteur.
